# EUROPEAN PATENT SPECIFICATION

(11) **EP 4 125 313 B1**
(45) Date of publication and mention of the grant of the patent: **23.10.2024**
(21) Application number: 21722281.9
(22) Date of filing: 29.03.2021
(51) Int. Cl.: A01B 59/00, A01B 59/06, G01L 5/00, G01L 3/02, A01B 73/02

(54) **AGRICULTURAL MACHINE WITH ELECTRONIC CONTROL AND RELEVANT OPERATING METHOD**
LANDWIRTSCHAFTLICHE MASCHINE MIT ELEKTRONISCHER STEUERUNG UND ENTSPRECHENDES BETRIEBSVERFAHREN
MACHINE AGRICOLE À COMMANDE ÉLECTRONIQUE ET PROCÉDÉ DE FONCTIONNEMENT APPROPRIÉ

(30) Priority: 27.03.2020 IT 202000006535; 04.12.2020 IT 202000030032
(43) Date of publication of application: 08.02.2023
(73) Proprietor: Maschio Gaspardo S.p.A., 35011 Campodarsego (PD) (IT)
(72) Inventor: MASCHIO, Andrea, 33075 Morsano al Tagliamento (PN) (IT); BARALDI, Paolo, 35137 Padova (IT); ZAMENGO, Davide, 30037 Scorzè (VE) (IT); FAGNANI, Francesco, 36051 Creazzo (VI) (IT)
(74) Representative: Locas, Davide
(86) International application number: PCT/IB2021/052584
(87) International publication number: WO 2021/191881

(56) References cited:
- CN-A- 107 421 676
- CN-A- 108 489 657
- CN-U- 204 495 501
- DE-A1- 3 816 828
- DE-C2- 3 816 828
- US-A1- 2018 220 574

## Description

The present invention relates to the field of agricultural machines with electronic control.

There is perceived the need to connect different agricultural machines by means of an electronic control system. Typically, this control system is carried out according to an Isobus protocol. This protocol is standardized in order to control the communication between tractors, software and equipment items in order to allow an exchange of data and information items with a universal language by means of a single control console which is integrated in the cabin of the tractor.

In particular, the present invention relates to the field of agricultural machines which are provided or intended to be provided for an Isobus connection and which are actuated by the power take-off of an agricultural tractor by suitable shafts and gearboxes.

In such machines, there is perceived the problem of allowing the detection of parameters correlated with the torque and the power transmitted by the power take-off of the tractor to the driven members of the agricultural machine.

For example, the document DE 3816828 describes a bevel gear with angled transmission for actuating agricultural machines with a movement input shaft, a movement output shaft and a device for measuring the coordinated couple at the input shaft or the output shaft. There is particularly provision for a casing which is provided with flanged support members for a conical toothed wheel, in which there is integrated the device for measuring the couple which is provided as a device operating without any contacts and which is mounted between two bearings which are provided in the support member for mounting one of the shafts.

Additional examples of devices for detecting a mechanical stress are described in CN 204495501, CN 108489657, CN 107421676 or US 2018220574.

In this context, the invention can better be used in the field of agricultural machines with foldable frames, wherein at least one lateral frame is hinged to a central frame and can generally be moved by means of fluid-dynamic actuators between an operating position (or working position) and a transport position, in which the agricultural machine takes up maximum and minimum dimensions, respectively.

In such machines, there is perceived inter alia the technical problem of jamming of the transmission shafts between the central gearbox and the transmission boxes on each lateral frame, which may cause damage to and breakage of the universal movement transmission joints as a result of the manoeuvring operations between the above-mentioned positions.

The technical problem addressed by the present invention is to provide a machine and a method which are structurally and functionally configured to at least partially overcome one or more of the disadvantages set out with reference to the cited prior art.

This problem is solved by the invention by means of a machine and a method comprising one or more of the features of the appended claims.

According to the invention, this problem is solved by measuring by means of a torque meter the counter-torque applied between the gearbox and the central frame of the operating machine while the tractor operates the machine itself by means of the power take-off (PTO).

This measure is preferably carried out by means of one or more load cell(s) which is/are interposed between the gearbox and the frame.

Both load cells of the electronic type and cells of the hydraulic and/or electrohydraulic type are suitable for this purpose. In preferred embodiments, the cell is of the shear beam or button type.

With a particular assembly with a bracket hinged both to the frame of the machine and to the gearbox, it is possible for the torque meter which acts as a hinge pin of the bracket to be isostatic at least in the measuring state.

Advantageously, the torque meter is arranged so as to measure the counter-torque between the gearbox and the frame which supports it with reference to a movement input axis in the gearbox or a movement output axis from the gearbox.

In an embodiment, the torque meter comprises an upper plate and a lower plate, of which one is secured to the gearbox and the other is secured to the frame, the upper plate and the lower plate being secured to each other with hinge type constraints in accordance with two axes which are mutually parallel and substantially parallel with the movement input axis or the movement output axis, one of the hinge type constraints including the load cell.

It may be noted that, advantageously, the axes of the hinge type constraints are spaced apart from each other in such a manner that the hinge type constraints can act counter to the rotation of the plates about the axes.

According to another advantageous aspect, the axes of the hinge type constraints are substantially parallel with the positioning plane of the plates or the positioning plane of at least one of the plates.

Preferably, the plates are secured to each other with hinge type constraints in accordance with only two axes which are mutually parallel. Even more preferably, only one of the hinge type constraints includes the load cell.

In a construction variant of the invention, there is provision for the other of the hinge type constraints to be positioned with respect to the corresponding movement input or output axis so as to minimize the torque generated with respect to the corresponding movement input or output axis by a thrust directed along this movement input or output axis. In this manner, the disruption signal introduced into the torque measurement by the axial thrusts of the universal joints is minimized.

If the other of the hinge type constraints is arranged to identify a hinge axis which substantially intersects orthogonally with the corresponding movement input or output axis, the above-mentioned disruption signal is cancelled by the effect of the cancellation of the arm between the axial thrust of the universal joints and the hinge axis.

In one aspect, the present invention relates to a kit for a folding harrow comprising an upper plate and a lower plate which are juxtaposed, spaced apart and secured with respect to each other with hinge type constraints in accordance with two mutually parallel axes, the axes being configured to be arranged parallel with a movement input axis into a gearbox of the folding harrow or a movement output axis out of the gearbox, one of the hinge type constraints including a load cell, the kit being arranged to be interposed between the gearbox and a support frame thereof in place of a horizontal alignment spacer of lateral shafts with a universal joint of the folding harrow.

It may be noted that, in this context, the term "frame" refers to a frame which is suitable for connecting at least one agricultural implement.

The kit further includes a communication connection by means of a communication protocol which is preferably an Isobus protocol.

In some embodiments, the kit is provided to be mounted in accordance with a levelling shim of the gearbox on the relevant frame.

The features and advantages of the invention will be better appreciated from the following detailed description of a preferred though non-limiting embodiment and application thereof which is illustrated by way of non-limiting example with reference to the appended drawings, in which:
- Figure 1 is a general perspective view of a rotary harrow with a foldable frame in a working position;

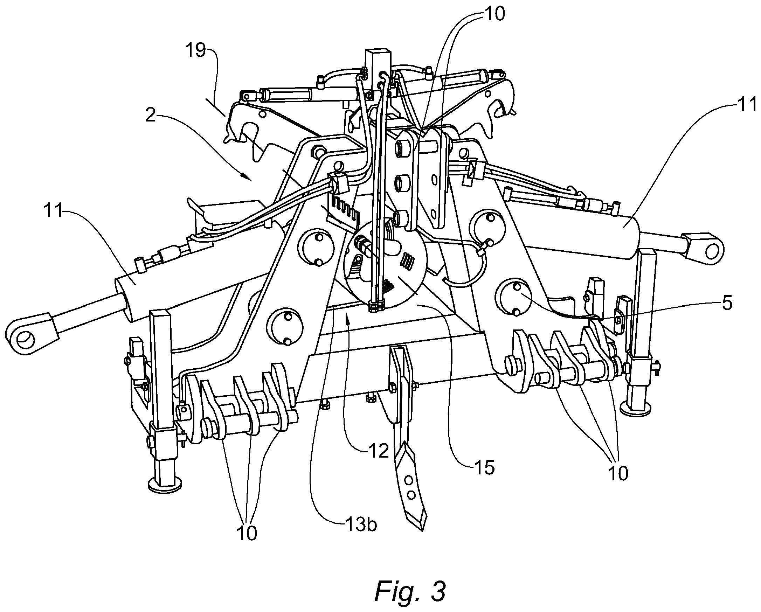

- Figures 2 and 3 are rear and front perspective views, respectively, of a detail relating to a central frame and a gearbox of the harrow of Figure 1;
- Figure 4 is a perspective view of the detail indicated by the arrow 12 of Figure 2;
- Figure 5 is a perspective view of a spacer;
- Figure 6 is a front partially-sectioned elevation view of a second embodiment of the invention;
- Figure 7 is a perspective view of a detail of Figure 6.

In the Figures, 1 generally indicates a rotary harrow with a foldable frame. The invention is further used in harrows with fixed frames or more generally in agricultural machines including a frame and a gearbox which is supported on the frame in order to be actuated by means of the PTO of an agricultural tractor generally via a transmission shaft with a double universal joint. Such machines may, for example, include milling cutters or the like.

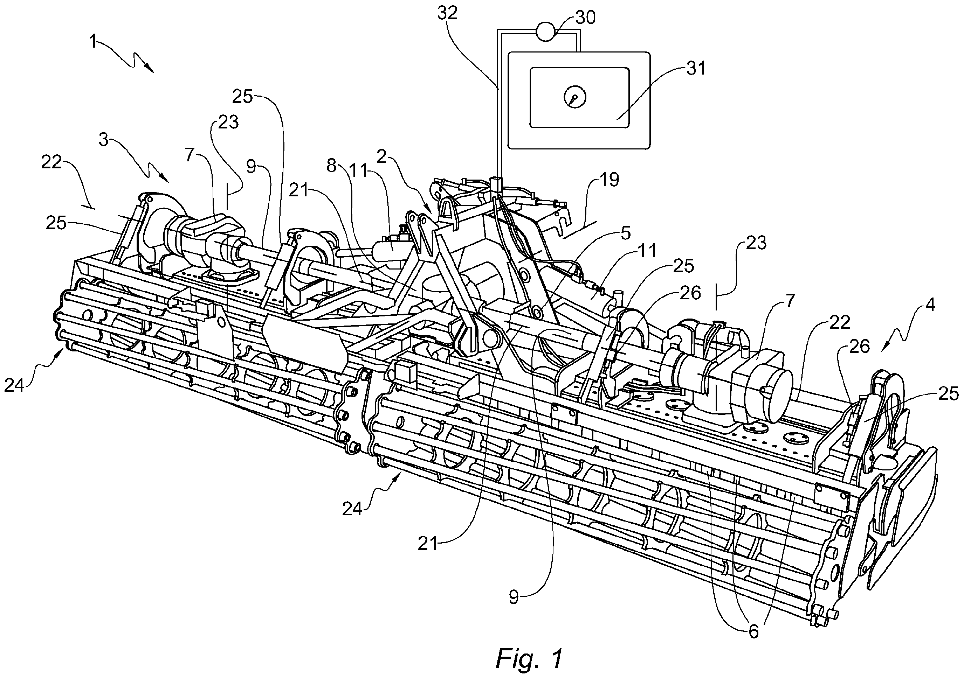

In a preferred embodiment thereof, the harrow 1 comprises a frame or central frame 2 which carries flanges 10 which are capable of configuring a three-point attachment for a hydraulic lift of an agricultural tractor and two lateral frames 3, 4 which are articulated to the central frame about respective hinges 5 and which can be pivoted between an operative position (illustrated in Figure 1), in which the lateral frames are lowered with a substantially coplanar arrangement, and a transport position, in which they are raised with an arrangement which is preferably mutually parallel with a minimal transverse spatial requirement of the machine 1.

A plurality of rotors with relevant implements 6 is mounted on each of the lateral frames 3 and 4.

In preferred embodiments, those rotors are motorized by means of respective secondary gearboxes 7 which are provided with movement output axes 23. The secondary gearboxes 7 in turn draw movement from a primary or central gearbox 8 which is mounted on a support 15 of the central frame 2.

The connection between the gearboxes 7, 8 and between the central gearbox 8 and the power take-off of an agricultural tractor is preferably brought about by means of universal joint shafts 9.

According to another aspect, for moving the lateral frames 3, 4 there may be provided fluid-dynamic cylinders 11 between the central frame 2 and the respective lateral frames 3, 4.

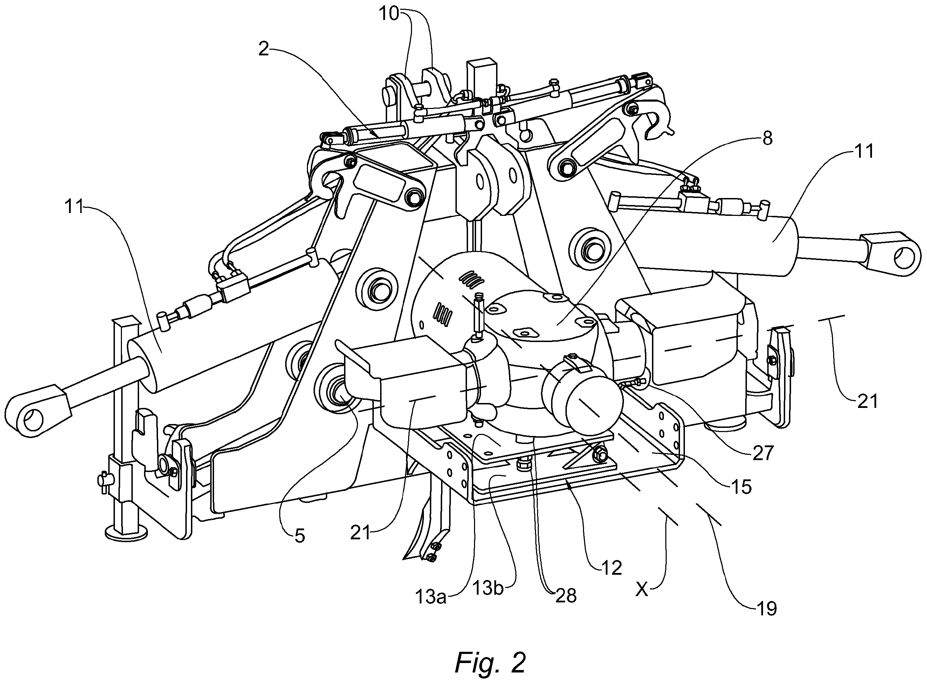

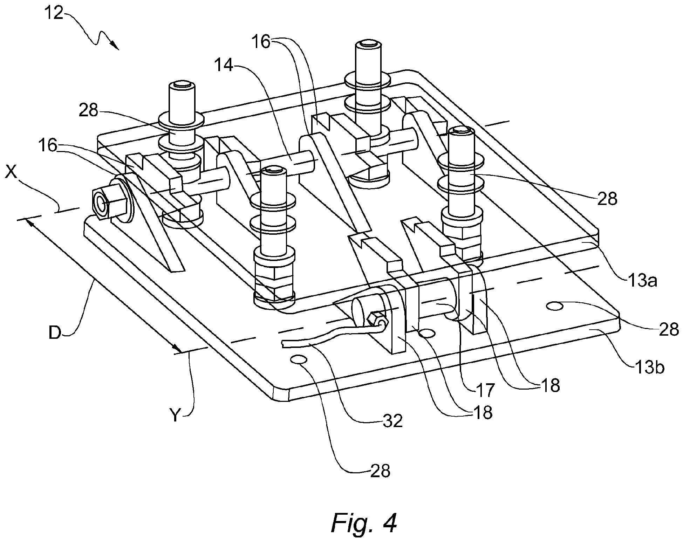

There is interposed between the central gearbox 8 and the central frame 2 a torque meter 12 according to the invention, as shown in Figure 2. In some embodiments, this torque meter 12 comprises a pair of upper and lower plates 13a, 13b, respectively, of which one is secured to the gearbox 8 and the other is secured to the frame 2. As better illustrated in Figure 4, the two plates 13a, 13b are preferably secured to each other with hinge type constraints 14, 17.

Preferably, along one side, the two plates 13a, 13b are hinged by means of a hinge pin 14 which extends through holes which are provided in pairs of flanges 16. The plates 13a, 13b can advantageously be connected to each other at the side opposite the pin 14 by means of a load cell 17 with a pin which extends into respective coaxial holes of second flanges 18 and which blocks the raising of the plates 13a, 13b.

By way of example, the shear beam cells are used to measure the loads applied to pulleys, hoists, cranes and weighing installations which may be integrated in overhead cranes.

The axes X and Y of the pins 14 and 17, respectively, are parallel and spaced apart (cf., for example, the spacing D in Figure 4) so that the torque meter 12 carries out an isostatic system when viewed from a plane which is transverse to the axes X, Y mentioned above. Preferably, the axes X and Y are further parallel with the movement input axis 19 into the central gearbox 8 so that the counter-torque generated by the power which is supplied via the gearbox 8 and which is discharged to the central frame 2 passes through the load cell 17.

In preferred embodiments, this load cell is provided with extensometers (not illustrated) and is therefore capable of measuring the shearing force which extends through it. With this force being known and knowing the geometry of the plates 13a, 13b and the pins 14, 17, therefore, it is readily possible to calculate the torque and the power supplied via the central gearbox 8.

In an embodiment, the axes X and Y can be parallel with at least one of the movement output axes 21 from the central gearbox 8. In this manner, the torque meter 12 can measure the counter-torque between the gearbox 8 and the frame 2 which supports it with reference to a movement output axis 21 from the central gearbox 8.

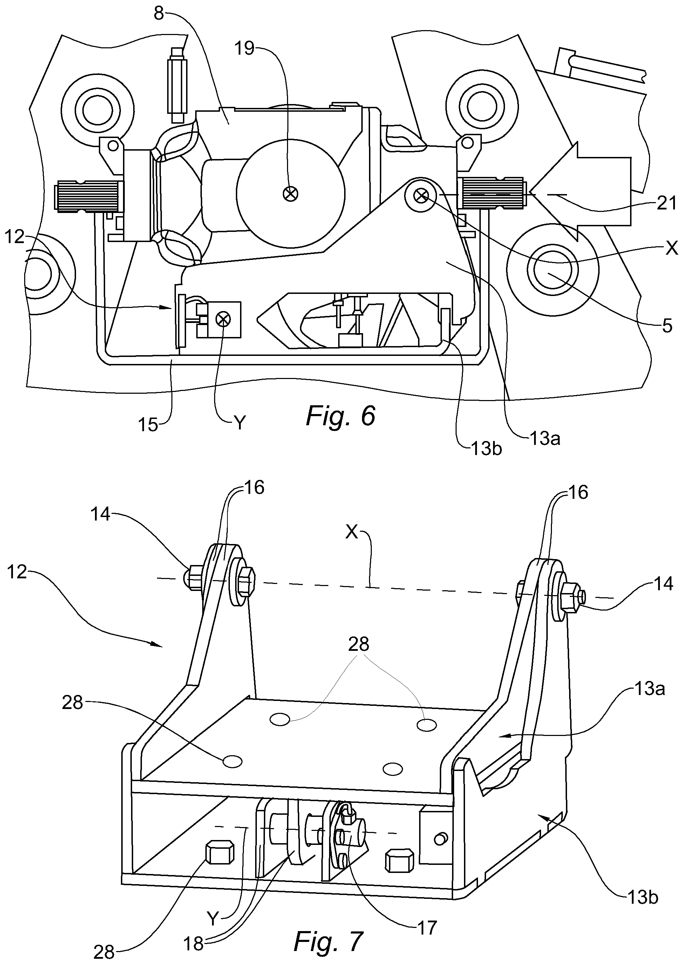

In Figures 6 and 7, the upper plate 13a and lower plate 13b are secured to each other with hinge type constraints 14, 17 in accordance with two axes X, Y which are mutually parallel but which are arranged in such a manner that one of the hinge type constraints includes the load cell 17 and the other of the hinge type constraints is positioned with respect to the corresponding movement output axis 21 so as to minimize the torque generated with respect to the corresponding movement output axis by a force directed in accordance with this axis. Reference has been made to the movement output axis but the result can be achieved similarly with reference to the movement input axis 19, where the torque to be analysed is this one.

Preferably, the other of the hinge type constraints 14 is arranged to identify a hinge axis X which substantially intersects orthogonally with the corresponding movement input or output axis.

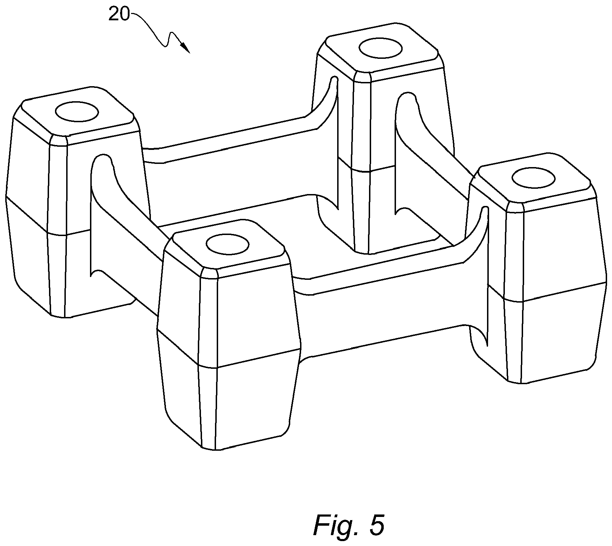

Preferably, the torque meter 12 is constructed with such a geometry as to be interchangeable (and therefore, to be able to replace without other adaptations), a spacer 20 (shown in Figure 5) which is normally used in conventional foldable harrows in order to space the assembly of the central gearbox 8 on the support 15 of the central frame 2 in order to level and align the movement output axes 21 from the central gearbox 8 with the movement input axes 22 of the secondary gearboxes 7, or to level the universal joint shafts 9 which connect them.

It may be observed that the torque meter 12 of this invention can be constructed in the form of a kit suitable for both the initial equipping of an agricultural machine 1 and potential retrofitting of conventional machines which are normally provided with the spacer 20 for levelling the gearbox 8. In this case, it is simply necessary to replace the spacer 20 with the above-mentioned kit.

According to an optional feature of the invention, the torque meter 12 comprises means 28 for reversible fixing to the gearbox 8, at one side, and to the frame 2, at the other. Preferably, the fixing means 28 are configured to cooperate with respective fixing counter-means which are provided on the gearbox 8 and on the frame 2.

In a preferred embodiment, the fixing means 28 are defined in the plates 13a, 13b. In this embodiment, the upper plate 13a and lower plate 13b comprise means for reversible fixing to the gearbox 8 and the frame 2, respectively, or vice versa.

Advantageously, the fixing means 28 include fixing openings or holes which are defined in the plates 13a, 13b. It may be noted that, preferably, the fixing holes are different from the mutual hinging holes of the plates themselves.

According to another advantageous aspect, the fixing counter-means also include fixing openings or holes which are defined in the gearbox 8 and in the frame 2 in positions corresponding to those of the fixing openings or holes of the plates 13a, 13b.

For example, one or more fixing holes can be provided through each of the plates 13a, 13b. The fixing holes may be through-holes or may be blind holes. In a preferred embodiment, the fixing holes are suitable for receiving bolts or other connection means, preferably of the threaded type, in order to reversibly fix the plates 13a, 13b to the gearbox 8 at one side and to the frame 2 at the other side, respectively, or vice versa.

In some embodiments, the holes for fixing to the frame 2 or the gearbox 8 in the plates 13a, 13b are constructed according to the same masks of the fixing holes of a conventional levelling spacer 20 and the overall thickness is identical so that the replacement can also be carried out by a non-skilled operator. In one aspect, the torque meter 21 is inserted in the machine 1 by securing the upper plate 13a to the central gearbox 8 and by securing the lower plate 13b to the support 15 of the central frame 2. Preferably, the torque meter 12 is inserted into the machine 1 in a manner parallel with the direction of the movement input axis 19 in the central gearbox 8.

The kit can be assembled in line and does not require any calibration, the torque measurement being brought about simply by the geometric parameters thereof. With this technical solution, it is possible to continuously measure the torque transmitted which in turn allows the measured data to be stored in a mass memory 30 in order to generate a historical archive which can be interrogated. It is thereby possible to cause data from other sensors which are fitted to the machine 1 to converge in the memory 30, for example, temperature sensors of the gearbox 7, 8, the function of which is to provide historical data of the operating temperature of each gearbox/branch and to generate alarms in the event of a predetermined thermal threshold being exceeded. There are further provided three rotation sensors, one for each universal joint shaft 9, which will control the possible intervention of the torque limiters in the event of occurrences of over-consumption.

In the rear portion of the harrow 1, there is preferably provided at least one roller 24, the position of which can be adjusted by means of hydraulic actuators 25 in order to vary the working depth of the implements 6. Advantageously, the hydraulic actuators 25 are configured to be blocked by means of blocking valves 26. Each roller is preferably provided with a position transducer (not shown) which detects the course of the adjustment hydraulic actuators 25 and consequently detects the working depth of the implements 6. Two additional proximity sensors 27 (of which one is indicated in Figure 2) can be provided between the central gearbox 8 and the universal joint shafts 9 which connect the movement outputs thereof to the secondary gearboxes 7. These proximity sensors 27 are used to read the angular position of the lateral universal joint shafts 9 during the closure step of the machine 1, preventing any breakages as a result of jams thereof.

In an aspect, the historical archive of the mass memory 30 can be interrogated by means of an Isobus terminal or monitor 31 which is part of the command console integrated in the cabin of the tractor or forming part of the above-mentioned kit. Preferably, the kit includes a communication connection 32 by means of a communication protocol (for example, Isobus). The Isobus terminal 31 allows integrated control of the information items which are stored in the mass memory 30, using an Isobus protocol, that is to say, using a universal language which allows communication between tractors, software and equipment items. Advantageously, the measurements stored in the mass memory can be used to monitor the degree of use of the machine. For example, it is possible to display on the Isobus monitor 31 information items, such as the consumption of power, the working depth, or different alarms. It is possible with the storage and integrated control of the information items also to control the maintenance activities of the harrow 1, and in particular the possible extension of a warranty because the data relating to malfunctions and overloads which are not adequately controlled by the operator will be detected and stored.

The invention thereby solves the problem set out by achieving a number of advantages, including:
- measurement of the torque continuously;
- possibility of interrogating the historical archive of the data;
- compatibility with the Isobus protocol and with the products provided with the protocol;
- compatibility with agricultural machines currently available;
- simplicity of assembly in line and without calibration;
- greater reliability of the agricultural machine over time;
- possibility of using information items useful for preventive and/or predictive maintenance.

## Claims

1. An agricultural machine (1) including a frame (2) which is configured to connect an agricultural implement and a gearbox (8) which is supported in the frame (2) and having at least one movement input axis (19) and at least one movement output axis (21), **characterized in that** there is interposed between the gearbox (8) and the frame (2) a torque meter (12) which is arranged so as to measure the counter-torque between the gearbox (8) and the frame (2) which supports it with reference to the movement input axis (19) or the movement output axis (21) at least in a working condition of the agricultural machine (1).

2. An agricultural machine (1) according to claim 1, wherein the torque meter (12) includes a load cell (17) which is interposed between the gearbox (8) and the frame (2).

3. An agricultural machine (1) according to claim 1 or claim 2, wherein the torque meter (12) includes a load cell (17) of the electronic and/or hydraulic type.

4. An agricultural machine (1) according to any one of the preceding claims, wherein the torque meter (12) includes a load cell (17) of the shear beam or button type and/or the torque meter (12) is isostatic at least in the measuring state.

5. An agricultural machine (1) according to any one of the preceding claims, wherein the torque meter (12) comprises an upper plate (13a) and a lower plate (13b), of which one is secured to the gearbox (8) and the other is secured to the frame (2), the upper plate (13a) and the lower plate (13b) being secured to each other with hinge type constraints (14, 17) in accordance with two axes (X, Y) which are mutually parallel and substantially parallel with the movement input axis (19) or the movement output axis (21), one of the hinge type constraints (14, 17) including a load cell (17).

6. An agricultural machine (1) according to the preceding claim, wherein the other of the hinge type constraints (14) is positioned with respect to the corresponding movement input or output axis (19, 21) so as to minimize the torque generated with respect to the corresponding movement input or output axis by a thrust directed along this movement input or output axis.

7. An agricultural machine (1) according to the preceding claim, wherein the other of the hinge type constraints (14) is arranged to identify a hinge axis (X) which substantially intersects orthogonally with the corresponding movement input or output axis.

8. An agricultural machine (1) according to any one of claims 5 to 7, wherein the hinge type constraint including the load cell (17) is of the type with a hinge pin.

9. An agricultural machine (1) according to any one of claims 5 to 8, wherein the upper plate (13a) and the lower plate (13b) constitute a system for levelling the gearbox (8) on the frame (2).

10. An agricultural machine (1) according to any one of the preceding claims, wherein there is provided at least one sensor which is selected from a temperature sensor of the gearbox (8) and at least one rotation sensor of a movement input axis (19, 22) or a movement output axis (21, 23) of the gearbox (8) or of a secondary gearbox (7).

11. An agricultural machine (1) according to any one of the preceding claims, wherein the frame (2) supports a plurality of implements (6).

12. An agricultural machine (1) according to claim 11, wherein the frame (2) is central, the agricultural machine (1) comprising two lateral frames (3, 4) which are articulated to the central frame, the implements (6) being supported on the lateral frames (3, 4).

13. A kit for an agricultural machine (1) including a torque meter (12) which is configured to be interposed between a gearbox (8) of the agricultural machine (1) and a frame (2) of the agricultural machine (1) which frame is suitable for connecting an agricultural implement, the torque meter (12) being configured to be arranged so as to measure the counter-torque between the gearbox (8) and the frame (2) which supports it with reference to a movement input axis (19) into the gearbox (8) or a movement output axis (21) out of the gearbox (8) at least in a working condition of the agricultural machine (1), the torque meter (12) comprising an upper plate (13a) and a lower plate (13b) with means (28) for reversible fixing to the gearbox (8) and the frame (2), respectively, or vice versa, the plates (13a, 13b) being juxtaposed, spaced apart and secured to each other with hinge type constraints (14, 17) in accordance with two axes (X, Y) which are spaced apart from and parallel with each other, the axes (X, Y) of the hinge type constraints being substantially parallel with the positioning plane of at least one of the plates (13a, 13b), the axes (X, Y) being configured to be arranged parallel with the movement input axis (19) or the movement output axis (21), one of the hinge type constraints including a load cell (17), the kit including a communication connection (32) by means of a communication protocol.

14. A method for controlling an agricultural machine (1) constructed according to one or more of claims 1 to 12, wherein, when the agricultural machine (1) is in a working condition, the torque meter (12) measures the counter-torque between the gearbox (8) and the frame (2) which supports it with reference to the movement input axis (19) or the movement output axis (21).

15. A method for controlling an agricultural machine (1) according to claim 14, wherein the measurements carried out by the torque meter (12) and where applicable by the at least one sensor are stored in a mass storage (30) and are used to calibrate, on the basis of the data themselves, the maintenance operations on the machine (1) and/or to monitor the degree of use of the machine (1).

## Patentansprüche

1. Landwirtschaftliche Maschine (1) mit einem Rahmen (2), der eingerichtet ist, um ein landwirtschaftliches Arbeitsgerät und ein im Rahmen (2) abgestütztes Getriebe (8) zu verbinden, und zumindest eine Bewegungseingangsachse (19) und zumindest eine Bewegungsausgangsachse (21) aufweist, **dadurch gekennzeichnet, dass** zwischen dem Getriebe (8) und dem Rahmen (2) ein Drehmomentmesser (12) angeordnet ist, der angeordnet ist, um das Gegendrehmoment zwischen dem Getriebe (8) und dem Rahmen (2), der es abstützt, in Bezug auf die Bewegungseingangsachse (19) oder die Bewegungsausgangsachse (21) zumindest in einem Betriebszustand der landwirtschaftlichen Maschine (1) zu messen.

2. Landwirtschaftliche Maschine (1) nach Anspruch 1, wobei der Drehmomentmesser (12) eine Kraftmesszelle (17) umfasst, die zwischen dem Getriebe (8) und dem Rahmen (2) angeordnet ist.

3. Landwirtschaftliche Maschine (1) nach Anspruch 1 oder 2, wobei der Drehmomentmesser (12) eine Kraftmesszelle (17) vom elektronischen und/oder hydraulischen Typ umfasst.

4. Landwirtschaftliche Maschine (1) nach einem der vorhergehenden Ansprüche, wobei der Drehmomentmesser (12) eine Kraftmesszelle (17) vom Scherbalken- oder Knopftyp umfasst und/oder der Drehmomentmesser (12) zumindest im Messzustand isostatisch ist.

5. Landwirtschaftliche Maschine (1) nach einem der vorhergehenden Ansprüche, wobei der Drehmomentmesser (12) eine obere Platte (13a) und eine untere Platte (13b) aufweist, von denen eine am Getriebe (8) und die andere am Rahmen (2) befestigt ist, wobei die obere Platte (13a) und die untere Platte (13b) mit gelenkartigen Einschränkungen (14, 17) in Übereinstimmung mit zwei Achsen (X, Y) aneinander befestigt sind, die zueinander parallel und im Wesentlichen parallel zur Bewegungseingangsachse (19) oder Bewegungsausgangsachse (21) sind, wobei eine der gelenkartigen Einschränkungen (14, 17) eine Kraftmesszelle (17) umfasst.

6. Landwirtschaftliche Maschine (1) nach dem vorhergehenden Anspruch, wobei die andere der gelenkartigen Einschränkungen (14) in Bezug auf die entsprechende Bewegungseingangs- oder -ausgangsachse (19, 21) positioniert ist, um das Drehmoment zu minimieren, das in Bezug auf die entsprechende Bewegungseingangsachse oder -ausgangsachse durch einen entlang dieser Bewegungseingangsachse oder -ausgangsachse gerichteten Schub erzeugt wird.

7. Landwirtschaftliche Maschine (1) nach dem vorhergehenden Anspruch, wobei die andere der gelenkartigen Einschränkungen (14) angeordnet ist, um eine Gelenkachse (X) zu identifizieren, die sich im Wesentlichen orthogonal mit der entsprechenden Bewegungseingangsachse oder -ausgangsachse schneidet.

8. Landwirtschaftliche Maschine (1) nach einem der Ansprüche 5 bis 7, wobei die Gelenktypeinschränkung, die die Kraftmesszelle (17) umfasst, vom Typ mit einem Scharnierstift ist.

9. Landwirtschaftliche Maschine (1) nach einem der Ansprüche 5 bis 8, wobei die obere Platte (13a) und untere Platte (13b) ein System zum Nivellieren des Getriebes (8) auf dem Rahmen (2) bilden.

10. Landwirtschaftliche Maschine (1) nach einem der vorhergehenden Ansprüche, wobei zumindest ein Sensor vorgesehen ist, der aus einem Temperatursensor des Getriebes (8) und zumindest einem Rotationssensor einer Bewegungseingangsachse (19, 22) oder einer Bewegungsausgangsachse (21, 23) des Getriebes (8) oder eines Nebengetriebes (7) ausgewählt wird.

11. Landwirtschaftliche Maschine (1) nach einem der vorhergehenden Ansprüche, wobei der Rahmen (2) eine Mehrzahl von Arbeitsgeräten (6) abstützt.

12. Landwirtschaftliche Maschine (1) nach Anspruch 11, wobei der Rahmen (2) mittig ist und die landwirtschaftliche Maschine (1) zwei seitliche Rahmen (3, 4) aufweist, die gelenkig mit dem zentralen Rahmen verbunden sind, wobei die Arbeitsgeräte (6) an den seitlichen Rahmen (3, 4) abgestützt sind.

13. Bausatz für eine landwirtschaftliche Maschine (1) mit einem Drehmomentmesser (12), der eingerichtet ist, um zwischen einem Getriebe (8) der landwirtschaftlichen Maschine (1) und einem Rahmen (2) der landwirtschaftlichen Maschine (1) angeordnet zu werden, wobei der Rahmen zum Anschluss eines landwirtschaftlichen Geräts geeignet ist, wobei der Drehmomentmesser (12) eingerichtet ist, um angeordnet zu werden, um das Gegendrehmoment zwischen dem Getriebe (8) und dem Rahmen (2), der es abstützt, in Bezug auf eine Bewegungseingangsachse (19) in das Getriebe (8) oder eine Bewegungsausgangsachse (21) aus dem Getriebe (8) zumindest in einem Betriebszustand der landwirtschaftlichen Maschine (1) zu messen, wobei der Drehmomentmesser (12) eine obere Platte (13a) und eine untere Platte (13b) mit Mitteln (28) zur reversiblen Befestigung am Getriebe (8) bzw. am Rahmen (2) oder umgekehrt aufweist, wobei die Platten (13a, 13b) nebeneinander liegen, voneinander beabstandet sind und mit gelenkartigen Einschränkungen (14, 17) in Übereinstimmung mit zwei voneinander beabstandeten und parallelen Achsen (X, Y) aneinander befestigt sind, wobei die Achsen (X, Y) der gelenkartigen Einschränkungen im Wesentlichen parallel zur Positionierungsebene von zumindest einer der Platten (13a, 13b) sind, wobei die Achsen (X, Y) eingerichtet sind, um parallel zur Bewegungseingangsachse (19) oder der Bewegungsausgangsachse (21) angeordnet zu sein, wobei eine der gelenkartigen Einschränkungen eine Kraftmesszelle (17) und der Bausatz eine Kommunikationsverbindung (32) mittels eines Kommunikationsprotokolls umfasst.

14. Verfahren zur Steuerung einer landwirtschaftlichen Maschine (1), die nach einem oder mehreren der Ansprüche 1 bis 12 konstruiert ist, wobei, wenn sich die landwirtschaftliche Maschine (1) in einem Betriebszustand befindet, der Drehmomentmesser (12) das Gegendrehmoment zwischen dem Getriebe (8) und dem Rahmen (2), der es abstützt, in Bezug auf die Bewegungseingangsachse (19) oder Bewegungsausgangsachse (21) misst.

15. Verfahren zur Steuerung einer landwirtschaftlichen Maschine (1) nach Anspruch 14, wobei die vom Drehmomentmesser (12) und gegebenenfalls von dem zumindest einen Sensor durchgeführten Messungen in einem Massenspeicher (30) gespeichert und dazu verwendet werden, auf der Grundlage der Daten selbst die Wartungsarbeiten an der Maschine (1) zu kalibrieren und/oder den Nutzungsgrad der Maschine (1) zu überwachen.

## Revendications

1. Machine (1) agricole comprenant un cadre (2) qui est configuré pour relier un outil agricole et une boîte de vitesses (8) qui est supportée dans le cadre (2) et ayant au moins un axe d'entrée de mouvement (19) et au moins un axe de sortie de mouvement (21), **caractérisée en ce qu'**est interposé entre la boîte de vitesses (8) et le cadre (2) un couplemètre (12) qui est agencé de façon à mesurer le couple antagoniste entre la boîte de vitesses (8) et le cadre (2) qui la supporte en référence à l'axe d'entrée de mouvement (19) ou l'axe de sortie de mouvement (21) au moins dans une condition de fonctionnement de la machine (1) agricole.

2. Machine (1) agricole selon la revendication 1, dans laquelle le couplemètre (12) comprend une cellule de charge (17) qui est interposée entre la boîte de vitesses (8) et le cadre (2).

3. Machine (1) agricole selon la revendication 1 ou la revendication 2, dans laquelle le couplemètre (12) comprend une cellule de charge (17) du type électronique et/ou hydraulique.

4. Machine (1) agricole selon l'une quelconque des revendications précédentes, dans laquelle le couplemètre (12) comprend une cellule de charge (17) du type poutre de cisaillement ou bouton et/ou le couplemètre (12) est isostatique au moins dans l'état de mesure.

5. Machine (1) agricole selon l'une quelconque des revendications précédentes, dans laquelle le couplemètre (12) comprend une plaque supérieure (13a) et une plaque inférieure (13b), dont une est assujettie à la boîte de vitesses (8) et l'autre est assujettie au cadre (2), la plaque supérieure (13a) et la plaque inférieure (13b) étant assujetties l'une à l'autre avec des contraintes de type charnière (14, 17) conformément à deux axes (X, Y) qui sont parallèles entre eux et sensiblement parallèles à l'axe d'entrée de mouvement (19) ou l'axe de sortie de mouvement (21), une des contraintes de type charnière (14, 17) comprenant une cellule de charge (17).

6. Machine (1) agricole selon la revendication précédente, dans laquelle l'autre des contraintes de type charnière (14) est positionnée par rapport à l'axe d'entrée ou de sortie de mouvement (19, 21) correspondant, de façon à réduire au minimum le couple généré par rapport à l'axe d'entrée ou de sortie de mouvement correspondant par une poussée dirigée le long de cet axe d'entrée ou de sortie de mouvement.

7. Machine (1) agricole selon la revendication précédente, dans laquelle l'autre des contraintes de type charnière (14) est agencée pour identifier un axe de charnière (X) qui croise sensiblement orthogonalement l'axe d'entrée ou de sortie de mouvement correspondant.

8. Machine (1) agricole selon l'une quelconque des revendications 5 à 7, dans laquelle la contrainte de type charnière comprenant la cellule de charge (17) est du type avec une broche de charnière.

9. Machine (1) agricole selon l'une quelconque des revendications 5 à 8, dans laquelle la plaque supérieure (13a) et la plaque inférieure (13b) constituent un système pour mettre à niveau la boîte de vitesses (8) sur le cadre (2).

10. Machine (1) agricole selon l'une quelconque des revendications précédentes, dans laquelle est fourni au moins un capteur qui est sélectionné parmi un capteur de température de la boîte de vitesses (8) et au moins un capteur de rotation d'un axe d'entrée de mouvement (19, 22) ou d'un axe de sortie de mouvement (21, 23) de la boîte de vitesses (8) ou d'une boîte de vitesses secondaire (7).

11. Machine (1) agricole selon l'une quelconque des revendications précédentes, dans laquelle le cadre (2) supporte une pluralité d'outils (6).

12. Machine (1) agricole selon la revendication 11, dans laquelle le cadre (2) est central, la machine (1) agricole comprenant deux cadres latéraux (3, 4) qui sont articulés sur le cadre central, les outils (6) étant supportés sur les cadres latéraux (3, 4).

13. Kit pour une machine (1) agricole comprenant un couplemètre (12) qui est configuré pour être interposé entre une boîte de vitesses (8) de la machine (1) agricole et un cadre (2) de la machine (1) agricole, lequel cadre est approprié pour être relié à un outil agricole, le couplemètre (12) étant configuré pour être agencé de façon à mesurer le couple antagoniste entre la boîte de vitesses (8) et le cadre (2) qui la supporte en référence à un axe d'entrée de mouvement (19) dans la boîte de vitesses (8) ou un axe de sortie de mouvement (21) hors de la boîte de vitesses (8) au moins dans une condition de fonctionnement de la machine (1) agricole, le couplemètre (12) comprenant une plaque supérieure (13a) et une plaque inférieure (13b) avec des moyens (28) pour une fixation réversible à la boîte de vitesses (8) et au cadre (2), respectivement, ou vice versa, les plaques (13a, 13b) étant juxtaposées, espacées et assujetties l'une à l'autre avec des contraintes de type charnière (14, 17) conformément à deux axes (X, Y) qui sont espacés l'un de l'autre et parallèles l'un à l'autre, les axes (X, Y) des contraintes de type charnière étant sensiblement parallèles au plan de positionnement d'au moins une parmi les plaques (13a, 13b), les axes (X, Y) étant configurés pour être agencés parallèlement à l'axe d'entrée de mouvement (19) ou l'axe de sortie de mouvement (21), une des contraintes de type charnière comprenant une cellule de charge (17), le kit comprenant une connexion de communication (32) au moyen d'un protocole de communication.

14. Procédé pour commander une machine (1) agricole construite selon une ou plusieurs des revendications 1 à 12, dans lequel, lorsque la machine (1) agricole est dans une condition de fonctionnement, le couplemètre (12) mesure le couple antagoniste entre la boîte de vitesses (8) et le cadre (2) qui la supporte en référence à l'axe d'entrée de mouvement (19) ou l'axe de sortie de mouvement (21).

15. Procédé pour commander une machine (1) agricole selon la revendication 14, dans lequel les mesures réalisées par le couplemètre (12) et où cela est applicable par l'au moins un capteur sont stockées dans une mémoire de masse (30) et sont utilisées pour calibrer, sur la base des données elles-mêmes, les opérations de maintenance sur la machine (1) et/ou pour surveiller le degré d'utilisation de la machine (1).
